# EUROPÄISCHE PATENTSCHRIFT

(11) **EP 0 452 250 B1**
(45) Veröffentlichungstag und Bekanntmachung des Hinweises auf die Patenterteilung: **16.06.1993**
(21) Anmeldenummer: 91810037.1
(22) Anmeldetag: 17.01.1991
(51) Int. Cl.: H01H 83/14, H02H 3/347

(54) **Fehlerstrom-Schutzeinrichtung**
Fault-current protective switchgear
Dispositif de protection de courant de fuite

(30) Priorität: 31.03.1990 DE 4010424
(43) Veröffentlichungstag der Anmeldung: 16.10.1991
(73) Patentinhaber: HILTI Aktiengesellschaft, 9494 Schaan (LI)
(72) Erfinder: Echtler, Karl, Dr., W-8039 Puchheim (DE)
(74) Vertreter: Wildi, Roland

(56) Entgegenhaltungen:
- DE-A- 3 431 581
- Der Elektromeister+deutsches elektrohandwerk vol. 51, no. 11, 1976, Heidelberg,DE Seite 681 "Personenschutz-Automat hilft elektrische Unfälle vermeiden"

## Beschreibung

Die Erfindung betrifft eine Fehlerstrom-Schutzeinrichtung gemäß dem Oberbegriff des Patentanspruchs 1, mit einem Fehlerstrom-Schutzschalter zur Absicherung von wenigstens zwei durch Verzweigung hinter dem Fehlerstrom-Schutzschalter erhaltenen Stromkreisen gleicher Phasenzahl.

Eine derartige Fehlerstrom-Schutzeinrichtung ist allgemein bekannt und kann beispielsweise in Form eines sogenannten Steckdosenaufbaus vorliegen. Zu dem Steckdosenaufbau gehören neben dem Fehlerstrom-Schutzschalter mehrere Steckdosen, beispielsweise 3 bis 5, die alle über den Fehlerstrom-Schutzschalter abgesichert sind. Hinsichtlich der einzelnen Stromkreise bzw. Steckdosen liegt keine Selektivität vor, so daß zum Beispiel bei Auftreten eines Isolationsfehlers in nur einem Stromkreis sämtliche Stromkreise abgeschaltet werden. Es liegt aber auch keine Selektivität hinsichtlich der Höhe der Schwelle einer Fehlerstromauslösung vor, so daß immer nur der gleiche Fehlerstrom zu einer Auslösung des Fehlerstrom-Schutzschalters zwecks Abschaltung aller Stromkreise führt.

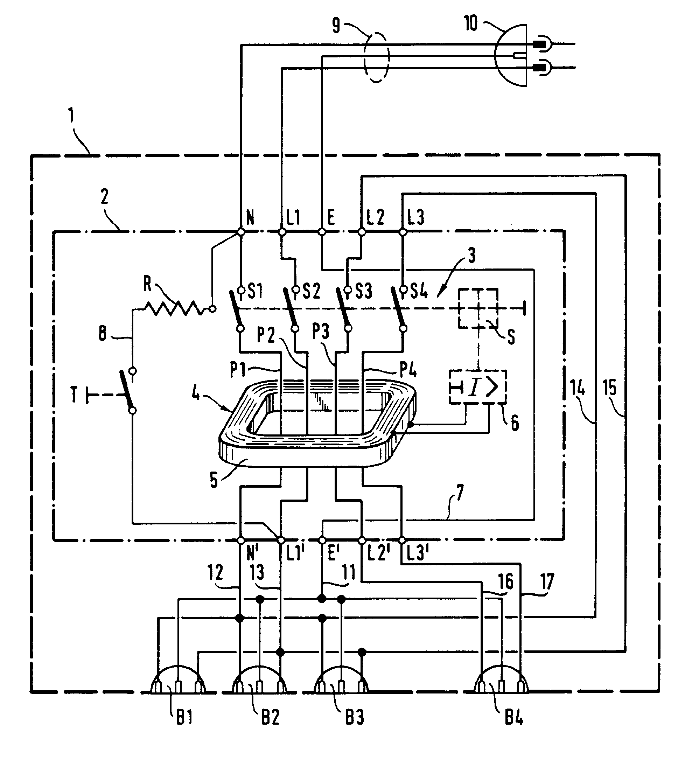

Aus der DE-A-34 31 581, aus der auch die obige Fehlerstrom-Schutzeinrichtung hervorgeht, ist eine weitere Fehlerstrom-Schutzeinrichtung bekannt, bei der zur Überwachungmehrerer Stromkreise jedem Stromkreis ein eigener Fehlerstrom-Schutzschalter zugeordnet ist. In diesem Zusammenhang sei auf die Figur 12 der DE-A-34 31 581 verwiesen. Den einzelnen Fehlerstrom-Schutzschaltern für die jeweiligen Stromkreise ist ein gemeinsamer Fehlerstrom-Schutzschalter vorgeschaltet, wobei sich sämtliche Fehlerstrom-Schutzschalter in einem einzigen Gehäuse befinden. Wie im Anspruch 18 dieser Druckschrift angegeben ist, können die den einzelnen Stromkreisen zugeordneten Fehlerstrom-Schutzschalter auch unterschiedlich hohe Nennfehlerstromauslösungen auf-weisen.

Der Erfindung liegt die Aufgabe zugrunde, die im Oberbegriff des Patentanspruchs 1 genannte Fehlerstrom-Schutzeinrichtung so weiterzubilden, daß es auch ohne Aufnahme zusätzlicher Fehlerstrom-Schutzschalter möglich ist, für die jeweiligen Stromkreise jeweils unterschiedliche Schwellen für eine Fehlerstromauslösung festzulegen.

Die der Erfindung zugrunde liegende Aufgabe wird dadurch gelöst, daß einer der durch Verzweigung hinter dem Fehlerstrom-Schutzschalter erhaltenen Stromkreise wenigstens einmal erneut über noch nicht belegte Anschlüsse des Fehlerstrom-Schutzschalters durch diesen hindurch geschleift ist.

Durch diese Maßnahme kann die Schwelle für die Fehlerstromauslösung des nochmals durch den Fehlerstrom-Schutzschalters hindurchgeschleiften Stromkreises gegenüber derjenigen des nur einmal durch den Fehlerstrom-Schutzschalter hindurchgeführten Stromkreises in Übereinstimmung mit der Anzahl der Hindurchschleifungen reduziert werden. Weist der Fehlerstrom-Schutzschalter beispielsweise einen Nennfehlerstrom I_{Δn} von 30 mA auf, so gilt diese Schwelle für den nur einmal durch den Summenstromwandler des Fehlerstrom-Schutzschalters hindurchgeführten Stromkreises. Für den durch Verzweigung erhaltenen Stromkreis, der nochmals durch den Fehlerstrom-Schutzschalter bzw. dessen Summenstromwandler hindurchgeschleift wird, wird dann ein Nennfehlerstrom I_{Δn} erhalten, der 15 mA beträgt. Eine weitere Reduzierung dieses Nennfehlerstromes läßt sich bei nochmaliger Hindurchschleifung des zuletzt genannten Stromkreises durch den Fehlerstrom-Schutzschalter erzielen, usw.

Um auf diese Weise mehr als zwei Stromkreise mit unterschiedlichen Nennfehlerströmen bzw. Fehlerstromauslösungen zu erhalten, kann jeder erneut durch den Fehlerstrom-Schutzschalter hindurchgeschleifte Stromkreis hinter dem fehlerstrom-Schutzschalter mit Abgriffen versehen werden. Ein erneut hindurchgeschleifter Stromkreis verzweigt sich also wiederum hinter dem Fehlerstrom-Schutzschalter, wobei einer dieser Zweige erneut über noch nicht belegte Anschlüsse des Fehlerstrom-Schutzschalters durch diesen hindurchgeschleift ist. Ein auf dieser Weise gebildeter Stromkreis würde also bei einem ursprünglichen Nennfehlerstrom I_{Δn} von 30 mA einen Nennfehlerstrom I_{Δn} von 10 mA aufweisen.

Die genannten Stromkreise können beispielsweise einphasig sein, so daß zu ihnen also zwei Adern gehören, nämlich eine Phase und ein Null-Leiter. Mit Hilfe eines vierpoligen Fehlerstrom-Schutzschalters lassen sich dann zwei Stromkreise mit unterschiedlichen Fehlerstromauslösungen bilden.

Die Stromkreise können aber auch dreiphasig sein, so daß zu ihnen vier Adern gehören, nämlich drei Phasen und ein Null-Leiter. Zur Bildung von zwei Stromkreisen mit unterschiedlichen Fehlerstromauslösungen käme dann ein achtpoliger Fehlerstrom-Schutzschalter zum Einsatz. Durch seinen Summenstromwandler würden dann acht Primärstromzweige hindurchlaufen. Auch in diesem Fall ließe sich der ursprüngliche Auslösestrom von z.B.30 mA für den zweiten Stromkreis auf 15 mA absenken.

Diese Absenkung ist insbesondere dann sinnvoll, wenn an eine FI-Steckdosenbox Geräte mit unterschiedlichen Schutzpegeln angeschlossen werden sollen. Hier kann es sich beispielsweise um einen durchzugsbelüfteten Diamantbohrmotor mit notwendigem hohen Schutzpegel (I_{Δn} = 15 mA) handeln und um weniger gefährliche Geräte, wie z.B. gekapselte Pumpenmotoren, Wassersauger oder Lampen. Für sie ist ein niedriger Schutzpegel (von z.B. I_{Δn} = 30 mA) voll ausreichend. Würde man für sämtliche Verbraucher, die an die FI-Steckdosenbox angeschlossen sind, den hohen Schutzpegel (I_{Δn} = 15 mA) vorsehen, so könnte es relativ oft zu Fehlerauslösungen kommen, wenn die weniger gefährlichen Geräte zusammen diesen Schutzpegel schon erreichen. Dies ist jedoch nicht erforderlich und wird durch die Fehlerstrom-Schutzeinrichtung nach der Erfindung unterbunden.

Eine besonders vorteilhafte Ausgestaltung der Erfindung zeichnet sich dadurch aus, daß der Fehlerstrom-Schutzschalter als vierpoliger Schutzschalter ausgebildet ist. Ein einem ersten Schutzschalter-Eingangsklemmenpaar zugeordnetes erstes Schutzschalter-Ausgangsklemmenpaar für den einen Stromkreis ist dabei auf ein zweites Schutzschalter-Eingangsklemmenpaar gelegt, dem ein zweites Schutzschalter-Ausgangsklemmenpaar für den anderen Stromkreis zugeordnet ist. Beide Stromkreise sind einphasig. Es lassen sich somit zwei Stromkreise mit unterschiedlichem Auslösestrom bilden, und zwar durch Verwendung eines handelsüblichen Fehlerstrom-Schutzschalters, so daß die gesamte Fehlerstrom-Schutzeinrichtung relativ kostengünstig herstellbar ist.

Die jeweiligen Stromkreise können sich ausgangsseitig in mehrere Parallelstromkreise aufteilen, die nicht nochmals durch den Fehlerstrom-Schutzschalter hindurchgeschleift werden, so daß allen Parallelstromkreisen der Schutzpegel des jeweiligen Stromkreises zugeordnet ist.

Zu diesem Zweck kann beispielsweise das erste Schutzschalter-Ausgangsklemmenpaar mit einer oder mehreren elektrisch parallel zueinander liegenden, zweipoligen Steckerbuchsen verbunden sein, während auch das zweite Schutzschalter-Ausgangsklemmenpaar mit einer oder mehreren elektrisch parallel zueinander liegenden, zweipoligen Steckerbuchsen verbunden sein kann. Sinngemäß gilt dies natürlich auch für dreiphasige Stromkreise.

Dabei können der Fehlerstrom-Schutzschalter und die Steckerbuchsen in einem gemeinsamen Gehäuse angeordnet sein, so daß sich ein kompakter Aufbau der Fehlerstrom-Schutzeinrichtung ergibt.

Die Energieversorgung der Fehlerstrom-Schutzeinrichtung kann beispielsweise über ein mit einem Stecker verbundenes Kabel erfolgen, das direkt mit dem Fehlerstrom-Schutzschalter verbunden ist. Beispielsweise kann das erste Schutzschalter-Eingangsklemmenpaar des vierpoligen Fehlerstrom-Schutzschalters über ein zweipoliges Kabel mit einem zweipoligen Stecker verbunden sein. Selbstverständlich ist noch die erforderliche Erdleitung vorhanden.

Ein Ausführungsbeispiel einer Fehlerstrom-Schutzeinrichtung nach der Erfindung wird nachfolgend unter Bezugnahme auf die einzige Zeichnung näher beschrieben.

Diese Fehlerstrom-Schutzeinrichtung besteht aus einem äußeren Gehäuse 1, das beispielsweise aus einem formsteifen Kunststoff gefertigt ist. Im Innern des Gehäuses 1 ist ein handelsüblicher Fehlerstrom-Schutzschalter 2 fest angeordnet, der beispielsweise einen Nennfehlerstrom I_{Δn} = 30 mA aufweist.Der Fehlerstrom-Schutzschalter 2 ist vierpolig ausgebildet und besitzt in üblicher Weise neben einer eingangsseitigen und einer ausgangsseitigen Erdanschlußklemme E, E' vier Eingangsklemmen N, L1, L2, L3 sowie vier Ausgangsklemmen N', L1', L2', L3'. Zwischen den Eingangsklemmen N, L1, L2, L3 und den Ausgangsklemmen N', L1', L2', L3' liegt ein Schalter 3 mit vier Schaltkontakten S1, S2, S3, S4 und einem Schaltschloß S zum gleichzeitigen Öffnen und Schließen der genannten Schaltkontakte S1, S2, S3, S4 mit Hilfe einer mechanischen Einrichtung, sowie ein Summenstromwandler 4. Primärseitig weist der Summenstromwandler 4 vier Primärstromzweige P1, P2, P3, P4 auf, von denen jeweils einer eine Ausgangsklemme N', L1', L2', L3' über einen zugehörigen Schaltkontakt S1, S2, S3, S4 mit einer der Eingangsklemmen N, L1, L2, L3 verbindet. Sämtliche Primärzweige P1, P2, P3, P4 werden von einer Sekundärwicklung 5 umschlossen, die bei Auftreten eines Fehlerstroms eine Fehlerspannung zur Ansteuerung eines Schaltrelais 6 liefert, das seinerseits das Schaltschloß S des Schalters 3 mechanisch betätigt, um sämtliche Schaltkontakte S1, S2, S3, S4 zu öffnen. Eine zwischen den Erdanschlußklemmen E, E' liegende Erdleitung 7 wird nicht durch die Sekundärwicklung 5 hindurchgeführt. Ein Prüfzweig 8 weist eine Reihenschaltung aus einem Prüfwiderstand R und einem Prüfschalter T auf und liegt beispielsweise zwischen der eingangsklemme N und Ausgangsklemme L1'. Bei Betätigung der Prüftaste T, die zur Überprüfung der Funktionsfähigkeit des Fehlerstrom-Schutzschalters dient, löst dieser im Betriebsfall aus, so daß der Schalter 3 öffnet.

Um die Fehlerstrom-Schutzeinrichtung mit Energie zu versorgen, ist der Fehlerstrom-Schutzschalter 2 eingangsseitig mit einem Kabel 9 verbunden, an dessen anderem Ende ein Stecker 10 angeschlossen ist. Es handelt sich hier um einen zweipoligen Stecker mit Erdkontakt. Die beiden Pole des Steckers sind über Leitungsadern auf die Eingangsklemmen L1 und N gelegt, während der Erdkontakt des Steckers 10 über eine weitere Leitungsader mit der Erdanschlußklemme E verbunden ist. Eine nicht dargestellte Zugsicherung kann beispielsweise zur mechanischen Befestigung des Kabels 9 am Gehäuse 1 dienen.

Die Fehlerstrom-Schutzeinrichtung enthält im vorliegendem Ausführungsbeispiel vier ausgangsseitige Steckerbuchsen B1, B2, B3, B4, die jeweils zweipolig sind und einen zusätzlichen Erdkontakt besitzen. Die Steckerbuchsen B1, B2, B3, B4 (Steckdosen) sind fest im Gehäuse 1 integriert und von außen zugänglich.

Die Erdkontakte aller Steckerbuchsen B1, B2, B3, B4 sind über eine gemeinsame Leitung 11 mit der ausgangsseitigen Erdanschlußklemme E' des Fehlerstrom-Schutzschalters verbunden. Ferner ist jeweils ein Pol der Steckerbuchsen B1, B2, B3 über eine Leitung 12 mit der Ausgangsklemme N' des Fehlerstrom-Schutzschalters 2 verbunden, während der jeweils andere Pol der Steckerbuchsen B1, B2, B3 über eine Leitung 13 mit der Ausgangsklemme L1' des Fehlerstrom-Schutzschalters 2 verbunden ist. Die Steckerbuchsen B1, B2, B3 dienen also zur Bildung von drei parallelen Stromkreisen, die jeweils mit einer relativ niedrigen Schwelle abgesichert sind, die durch einen Nennfehlerstrom von I_{Δn} = 30 mA bestimmt ist, für den der Fehlerstrom-Schutzschalter ursprünglich ausgelegt worden war.

Ferner ist die Ausgangsklemme N' über die Leitung 12 und eine Leitung 14 mit der Eingangsklemme L3 des Fehlerstrom-Schutzschalters 2 verbunden, während die Ausgangsklemme L1' über die Leitung 13 und eine Leitung 15 mit der Eingangsklemme L2 des Fehlerstrom-Schutzschalters 2 verbunden ist. Die Ausgangsklemme L2' ist über eine Leitung 16 mit einem Pol der Steckerbuchse B4 verbunden und die Ausgangsklemme L3' über eine Leitung 17 mit dem anderen Pol dieser Steckerbuchse B4. Der durch die Leitungen 14, 15, 16 und 17 gebildete Stromkreis durchläuft also nochmals den Summenstromwandler 4 über die Schaltkontakte S3, S4 und die Primärzweige P3, P4, so daß der über die Steckerbuchse B4 fließende Strom letztendlich zweimal durch den Summenstromwandler 4 hindurchtritt. Ein über die Steckerbuchse B4 fließender Fehlerstrom braucht daher nur halb so groß zu sein wie ein Fehlerstrom, der über eine der Steckerbuchsen B1, B2, B3 fließt, um den Fehlerstrom-Schutzschalter 2 auszulösen, und zwar aufgrund der doppelten Windungszahl infolge des nochmaligen Hindurchschleifens des für die Steckerbuchse B4 vorgesehenen Stromkreises durch den Summenwandler 4. Der Steckerbuchse B4 ist daher ein höherer Schutzpegel zugeordnet, entsprechend einem noch niedrigeren Nennfehlerstrom von I_{Δn} = 15 mA.

Selbstverständlich können auch zur Steckerbuchse B4 weitere Stromkreise parallel liegen, die dann ebenfalls mit dem höheren Schutzpegel abgesichert sind.

## Patentansprüche

1. Fehlerstrom-Schutzeinrichtung mit einem Fehlerstrom-Schutzschalter (2) zur Absicherung von wenigstens zwei durch Verzweigung hinter dem Fehlerstrom-Schutzschalter (2) erhaltenen Stromkreisen mit gleicher Phasenzahl, **dadurch** gekennzeichnet, daß einer (14,15-16,17) der Stromkreise wenigstens einmal erneut über noch nicht belegte Anschlüsse (L2,L3-L2',L3') des Fehlerstrom-Schutzschalters (2) durch diesen hindurchgeschleift ist.

2. Fehlerstrom-Schutzeinrichtung nach Anspruch 1, **dadurch gekennzeichnet**, daß sich ein erneut hindurchgeschleifter Stromkreis hinter dem Fehlerstrom-Schutzschalter (2) verzweigt und einer dieser Zweige erneut über noch nicht belegte Anschlüsse des Fehlerstrom-Schutzschalters durch diesen hindurchgeschleift ist.

3. Fehlerstrom-Schutzeinrichtung nach Anspruch 1 oder 2, **dadurch gekennzeichnet**, daß die Stromkreise einphasig sind.

4. Fehlerstrom-Schutzeinrichtung nach Anspruch 1 oder 2, **dadurch gekennzeichnet**, daß die Stromkreise dreiphasig sind.

5. Fehlerstrom-Schutzeinrichtung nach Anspruch 3, **dadurch gekennzeichnet**, daß der Fehlerstrom-Schutzschalter als vierpoliger Schutzschalter ausgebildet ist, und daß ein einem ersten Schutzschalter-Eingangsklemmenpaar (N, L1) zugeordnetes erstes Schutzschalter-Ausgangsklemmenpaar (N', L1') für den einen Stromkreis auf ein zweites Schutzschalter-Eingangsklemmenpaar (L2, L3) gelegt ist, dem ein zweites Schutzschalter-Ausgangsklemmenpaar (L2', L3') für den anderen Stromkreis zugeordnet ist.

6. Fehlerstrom-Schutzeinrichtung nach Anspruch 5, **dadurch gekennzeichnet**, daß das erste Schutzschalter-Eingangsklemmenpaar (N, L1) über ein Kabel (9) mit einem zweipoligen Stecker (10) verbunden ist.

7. Fehlerstrom-Schutzeinrichtung nach Anspruch 5 oder 6, **dadurch gekennzeichnet**, daß das erste Schutzschalter-Ausgangsklemmenpaar (N', L1') mit einer oder mehreren elektrisch parallel zueinander liegenden, zweipoligen Steckerbuchsen (B1, B2, B3) verbunden ist.

8. Fehlerstrom-Schutzeinrichtung nach einem der Ansprüche 5 bis 7, **dadurch gekennzeichnet**, daß das zweite Schutzschalter-Ausgangsklemmenpaar (L2', L3') mit einer oder mehreren elektrisch parallel zueinander liegenden, zweipoligen Steckerbuchsen (B4) verbunden ist.

9. Fehlerstrom-Schutzeinrichtung nach Anspruch 7 und 8, **dadurch gekennzeichnet**, daß der Fehlerstrom-Schutzschalter (2) und die Steckerbuchsen (B1-B4) in einem gemeinsamen Gehäuse (1) angeordnet sind.

10. Fehlerstrom-Schutzeinrichtung nach einem der Ansprüche 5 bis 9, **dadurch gekennzeichnet**, daß der Fehlerstrom-Schutzschalter (2) auf einen Nennfehlerstrom (I_{Δn}) im Milliampere-Bereich eingestellt ist, z.B. auf 30 mA.

## Claims

1. Leakage-current protection device comprising a leakage-current protection switch (2) for securing at least two electric circuits of identical phase which have been established by branching on the output side of the leakage-current switch (2), **characterised in that** one (14, 15 - 16, 17) of the electric circuits again loops at least once through not yet covered connections (L2, L3 - L2', L3') of the leakage-current protection switch (2).

2. Leakage-current protection device according to claim 1, **characterised in that** an again looped through electrical circuit branches off at the output side of the leakage-current protection switch (2) and that one of these branches again loops through the latter via not yet covered connections of the leakage-current protection switch.

3. Leakage-current protection device according to claim 1 or 2, **characterised in that** the electric circuits are single-phased.

4. Leakage-current protection device according to claim 1 or 2, **characterised in that** the electric circuits are three-phased.

5. Leakage-current protection device according to claim 3, **characterised in that** the leakage-current protection device is arranged as a four-pole protection switch, and that a first pair of protection-switch output clamps (N', L1'), which is associated with a first pair of protection-switch input clamps (N, L1), is for the one electrical circuit connected to a second pair of protection-switch output clamps (L2, L3) which is associated with a second pair of protection-switch output clamps (L2', L3') for the other electrical circuit.

6. Leakage-current protection device according to claim 5, **characterised in that** the first pair of protection-switch input clamps (N, L1) is connected via a cable (9) to a two-pole plug (10̸).

7. Leakage-current protect ion devi ce according to claim 5 or 6, **characterised in that** the first pair of protection-switch output clamps (N', L1') is connected to one or more electrically parallel two-pole sockets (B1, B2, B3.

8. Leakage-current protection device according to one of claims 5 to 7, **characterised in that** the second pair of protection-switch output clamps (L2', L3') is connected to one or more electrically parallel two-pole sockets (B4).

9. Leakage-current protection device according to claim 7 and 8, **characterised in that** the leakage-current protection switch (2) and the sockets (B1 - B4) are arranged in a common housing (1).

10. Leakage-current protection device according to one of claims 5 to 9, **characterised in that** the leakage-current protection switch (2) is set at a nominal leakage current (I_{Δn}) in the milli-ampere range, for example at 30̸ mA.

## Revendications

1. Dispositif de protection contre des courants de fuite, comprenant un disjoncteur de protection à courant de fuite (2) pour la protection d'au moins deux circuits à nombre de phase égal formés par dérivation en aval du disjoncteur de protection à courant de fuite (2), caractérisé en ce que l'un des circuits (14, 15 - 16, 17) repasse au moins une nouvelle fois en boucle par le disjoncteur de protection à courant de fuite (2) par l'intermédiaire de bonnes (L2, L3 - L2', L3') non encore occupées dudit disjoncteur.

2. Dispositif de protection contre des courants de fuite selon la revendication 1, caractérisé en ce qu'un circuit bouclé une nouvelle fois est ramifié en aval du disjoncteur de protection à courant de fuite (2) et que l'une de ces branches repasse en boucle par le disjoncteur de protection à courant de fuite par l'intermédiaire de bornes non encore occupées dudit disjoncteur.

3. Dispositif de protection contre des courants de fuite selon l'une des revendications 1 ou 2, caractérisé en ce que les circuits sont monophasés.

4. Dispositif de protection contre des courants de fuite selon l'une des revendications 1 ou 2, caractérisé en ce que les circuits sont triphasés.

5. Dispositif de protection contre des courants de fuite selon la revendication 3, caractérisé en ce que le disjoncteur de protection à courant de fuite est réalisé sous la forme d'un disjoncteur de protection quadripolaire, et qu'une première paire de bornes de sortie (N', L1') du disjoncteur de protection associée pour l'un des circuits à une première paire de bornes d'entrée (N', L1) du disjoncteur de protection, est reliée à une seconde paire de bornes d'entrée (L2, L3) du disjoncteur de protection à laquelle est associée pour l'autre circuit une seconde paire de bornes de sortie (L2', L3') du disjoncteur de protection.

6. Dispositif de protection contre des courants de fuite selon la revendication 5, caractérisé en ce que la première paire de bornes d'entrée (N, L1) du disjoncteur de protection est reliée par l'intermédiaire d'un câble (9) à une prise bipolaire (10).

7. Dispositif de protection contre des courants de fuite selon l'une des revendications 5 ou 6, caractérisé en ce que la première paire de bornes de sortie (N', L1') du disjoncteur de protection est reliée à une ou plusieurs fiches femelles de prises bipolaires (B1, B2, B3) électriquement montées en parallèle.

8. Dispositif de protection contre des courants de fuite selon l'une des revendications 5 à 7, caractérisé en ce que la seconde paire de bornes de sortie (L2', L3') du disjoncteur de protection est reliée à une ou plusieurs fiches femelles de prises bipolaires (B4) électriquement montées en parallèle.

9. Dispositif de protection contre des courants de fuite selon l'une des revendications 7 et 8, caractérisé en ce que le disjoncteur de protection à courant de fuite (2) et les fiches femelles de prises (B1 à B4) sont logés dans un boîtier commun (1).

10. Dispositif de protection contre des courants de fuite selon l'une des revendications 5 à 9, caractérisé en ce que le disjoncteur de protection à courant de fuite (2) est réglé sur un courant de fuite nominal (I ₙ) de l'ordre du milliampère, par exemple sur 30 mA.
